# EUROPÄISCHE PATENTSCHRIFT

(11) **EP 1 961 299 B1**
(45) Veröffentlichungstag und Bekanntmachung des Hinweises auf die Patenterteilung: **22.06.2011**
(21) Anmeldenummer: 08002893.9
(22) Anmeldetag: 15.02.2008
(51) Int. Cl.: A01M 7/00

(54) **Spritzeinrichtung**
Spraying device
Dispositif de pulvérisation

(30) Priorität: 22.02.2007 DE 102007008786
(43) Veröffentlichungstag der Anmeldung: 27.08.2008
(73) Patentinhaber: Amazonen-Werke H. Dreyer GmbH & Co. KG, 49205 Hasbergen (DE)
(72) Erfinder: Ehlen, Volker, 49205 Hasbergen (DE); Baye, Dietrich, 49492 Westerkappeln (DE)

(56) Entgegenhaltungen:
- WO-A-97/16964
- DE-A1- 19 904 102
- DE-A1- 19 907 351
- GB-A- 2 048 091

## Beschreibung

Die Erfindung betrifft eine Spritzeinrichtung gemäß des Oberbegriffes des Patentanspruches 1.

Die GB 2 048 091 A1 zeigt eine entsprechende Spritzeinrichtung. Bei dieser Spritzeinrichtung kann über ein Einstellsystem das Verhältnis zwischen Trägerflüssigkeitsmenge und Wirkstoff in veränderbarer Weise eingestellt werden.

Eine weitere Spritzeinrichtung ist durch DE 103 12 930 A1 bekannt. Bei derartigen Spritzsystemen wird die Spritzbrühe nicht vor dem Ausbringen der Spritzflüssigkeit angemischt, d.h. es wird keine Trägerflüssigkeit mit Wirkstoffmitteln in dem Flüssigkeitstank vorab zur Spritzbrühe angemischt. Derartige Systeme werden als Direkteinspeisesysteme bezeichnet. Diese Direkteinspeisesysteme bieten die Möglichkeit unmittelbar vor dem Ausbringen des Wirkstoffmittels die Wirkstoffmittelmenge, die der Trägerflüssigkeit zugesetzt wird, entsprechend den Anforderungen der Zielfläche angepasst ausbringen zu können.

Um wirtschaftlich arbeiten zu können, müssen mit der Feldspritze die Ausbringarbeiten auch bereits früh morgens und noch abends durchgeführt werden. Nur so ist genügend Ausbringzeit vorhanden. Dies ist darauf zurückzuführen, dass während des Tages insbesondere bei Sonnenschein über die Mittagsstunden keine Pflanzenschutzmittel sinnvoll ausgebracht werden können, weil es dann zu Beschädigungen an den Blättern und den Pflanzen selber kommt. Die Flüssigkeitstropfen wirken dann wie optische Linsen, so dass es zu Verbrennungen an den Pflanzen kommt.

Das Problem besteht nun darin, dass sich in den frühen Morgenstunden und in den Abendstunden sich auf den Pflanzen Feuchtigkeit, sog. Tau niederschlägt. Wenn bereits zu viel Flüssigkeit in Form von Tau sich auf den Pflanzen, insbesondere auf deren Blättern niedergeschlagen hat, haften die die Wirkstoffmittel enthaltenen Sprühtröpfchen, die von den Düsen der Spritzeinrichtung ausgebracht werden, nicht auf den Pflanzen und deren Blättern, sondern rollen oder fließen aufgrund der auf den Pflanzen und Blättern bereits vorhandenen Flüssigkeit von diesen ab. Nur eine gewisse Flüssigkeitsmenge kann an den Pflanzen und Blättern haften bleiben. Wenn die Wirkstoffmittel enthaltenen Tröpfchen von den Pflanzen und deren Blättern herunterrollen oder fließen wird die angestrebte Wirkung nicht erreicht.

Der Erfindung liegt die Aufgabe zugrunde, die Ausbringung der Wirkstoffmittel auch im Hinblick auf die Trägerflüssigkeit und dem möglichen Ausbringzeitraum zu erweitern und zu optimieren.

Diese Aufgabe wird erfindungsgemäß durch das kennzeichnende Merkmal des Patentanspruches 1 gelöst. Infolge dieser Maßnahme kann die Menge der Trägerflüssigkeit, in der Regel Wasser, soweit reduziert werden, dass noch eine ausreichend große Tröpfchengröße für die Ausbringung des Wirkstoffträgerflüssigkeitsgemisches, ohne die Gefahr der Abtrift der Tröpfchen erhalten wird. Hierdurch wird erreicht, dass von den bereits bis zu einem gewissen Feuchtigkeitsgrad mit Tau benetzten Pflanzen und Blätter die Tröpfchen nicht abrollen. Somit lässt sich in den Morgen- und Abendstunden die Ausbringzeit, auch wenn die Pflanzen und Blätter noch oder schon mit Tau benetzt sind, verlängern, weil die Trägerflüssigkeitwirkstoffkonzentration durch Absenken der Trägerflüssigkeitsmenge an die auf den Pflanzen und Blättern sich befindliche Taumenge angepasst werden kann. Somit erfolgt eine automatische Anpassung der den Spritzdüsen zugeleitete Trägerflüssigkeitsmenge entsprechend des Feuchtebedeckungsgrades der Pflanzen.

Somit ist also die den Spritzdüsen zugeleitete Menge der Trägerflüssigkeit in Abhängigkeit klimatischer Einflüsse über die Einstellvorrichtung einstell- und veränderbar.

Auch lässt sich durch diese Maßnahme eine Anpassung an die Dichte der Pflanzen sowie an den Tauniederschlagsgrad dadurch erreichen, dass die Einstellvorrichtung die Menge der Trägerflüssigkeit in Abhängigkeit des Blattflächenindex und des Feuchtebedeckungsgrades der mit dem Wirkstoffmittel zu behandelnden Pflanzen einstellt und/oder verändert.

Um die den Spritzdüsen zuzuleitende Menge der Trägerflüssigkeit entsprechend den jeweiligen Gegebenheiten in einfacher Weise ermitteln zu können, ist vorgesehen, dass der Spritzeinrichtung zumindest eine Sensoreinrichtung zur Ermittlung des Blattflächenindex und des Feuchtegrades der Pflanzen zugeordnet ist.

Eine weitere Verbesserung der Anpassung kann dadurch erreicht werden, dass in Abhängigkeit der Luftfeuchtigkeit die Menge der Trägerflüssigkeit einstellbar ist.

Manche Wirkstoffmittel erreichen bei unterschiedlichen Temperaturen eine unterschiedliche Wirksamkeit. Um sich hieran anpassen zu können, ist vorgesehen, dass ein Sensor zur Ermittlung der Pflanzentemperatur vorhanden ist.

Um sich auch den Gegebenheiten der Zielfläche im Hinblick auf die auszuführenden Arbeiten hinsichtlich der verschiedenen Parameter anpassen zu können, ist vorgesehen, dass mittels einer weiteren Einstellvorrichtung die Menge des Wirkstoffmittels einstell- und/oder veränderbar ist.

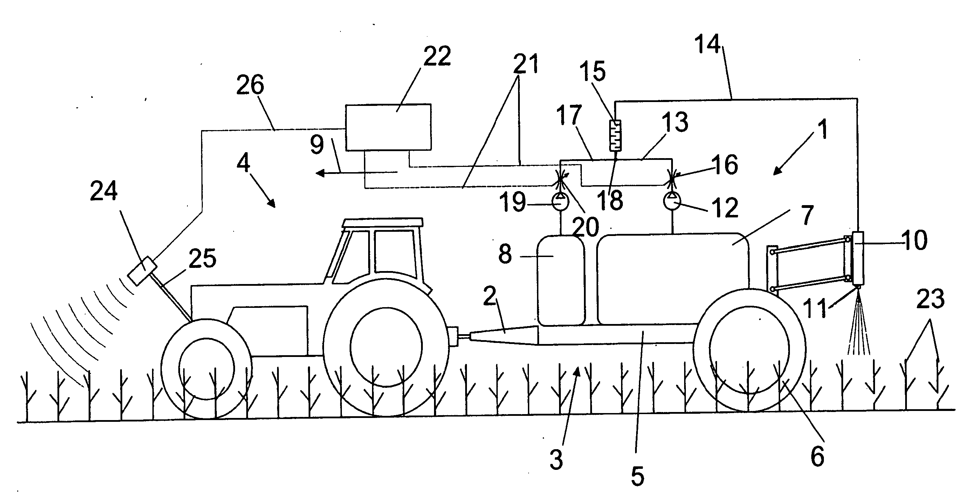

Weitere Einzelheiten der Erfindung sind den übrigen Unteransprüchen, der Beispielbeschreibung und der Zeichnung zu entnehmen. Die Zeichnung zeigt

die erfindungsgemäße Spritzeinrichtung mit Funktionsschema in Prinzipdarstellung.

Die Spritzeinrichtung ist als gezogene Feldspritze 1 ausgebildet und über die Zugdeichsel 2 des Fahrgestelles 3 an die Anhängekupplung eines Ackerschleppers 4 angehängt. Die als Feldspritze ausgebildete Spritzeinrichtung 1 weist einen Rahmen 5, mit einem Laufräder 6 aufweisenden Fahrwerk auf, welches als Fahrgestell 3 ausgebildet ist. Auf dem Rahmen 5 ist ein Flüssigkeitstank 7 zur Aufnehme von Trägerflüssigkeit, in der Regel Wasser, angeordnet. Des weiteren ist auf dem Rahmen 5 ein Flüssigkeitsbehälter 8 zur Aufnahme von konzentrierten oder vorverdünnten Wirkstoffmittel angeordnet. Weiterhin weist die Spritzeinrichtung 1 ein höheneinstellbares und sich in Arbeitsstellung quer zur Fahrtrichtung 9 erstreckendes Verteilergestänge 10 auf, an welchem in Abständen zueinander Verteilerdüsen 11 angeordnet sind. Über eine die Trägerflüssigkeit fördernde Pumpe 12, die den Spritzdruck erzeugt, wird über Flüssigkeitsleitungen 13, 14 und eine Mischeinrichtung 15 den Verteilerdüsen 11 die Trägerflüssigkeit zugeführt.

In der Leitung 13 zwischen der den Spritzdruck erzeugenden Flüssigkeitspumpe 12 und der Mischkammer 15 ist eine einstellbare Dosierarmatur 16 angeordnet. Dem Wirkstoffmitteltank 8 ist eine das Wirkstoffmittel über die Leitung 17 fördernde und in die Trägerflüssigkeit an der Einspeisestelle 18 in dosierender Weise einspeisende Dosierpumpe 19 mit einstellbarer Dosiereinrichtung 20 zugeordnet. In der Mischkammer 15 wird das von der Dosierpumpe 19 in die Trägerflüssigkeit eingespeiste Wirkstoffmittel mit Trägerflüssigkeit vermischt, so dass Wirkstoffträgermittelgemisch über die Leitung 14 in gleichmäßiger Weise den Spritzdüsen 11 zugeführt wird. Dadurch, dass in einstellbarer Weise die Trägerflüssigkeit die Düsen 11 zugeleitet werden kann, kann die den Spritzdüsen 11 zugeleitete Menge der Trägerflüssigkeit mittels der der Dosiereinrichtung 16 zugeordneten Einstellvorrichtung eingestellt und verändert werden.

Weiterhin kann durch die einstellbare Dosierpumpe 19 bzw. der der Dosierpumpe 19 zugeordneten Einstellvorrichtung 20 die in die Trägerflüssigkeit eingespeiste Wirkstoffmittelmenge variiert werden.

Die Dosierarmatur 16 und die Einstellvorrichtung 20 sind über Datenleitungen 21 mit einem Bordcomputer 22 verbunden. Über den Bordcomputer 22 werden die Dosierarmatur 16 und die Einstellvorrichtung 20 entsprechend eingestellt.

Hierbei ist die Variation der Ausbringmenge an Trägerflüssigkeit in Abhängigkeit klimatischer Einflüsse einzustellen und zu verändern, insbesondere auch in Abhängigkeit des Blattflächenindex, oder erfindungsgemäß in Abhangigkeit des Feuchtebedeckungsgrades der mit dem Wirkstoff zu behandelnden Pflanze.

Um die den Ausbringdüsen 11 zugeführte Trägerflüssigkeitsmenge entsprechend des Feuchtebedeckungsgrades der Pflanzen 23 ermitteln und in automatischer Weise anpassen zu können, ist eine Sensoreinrichtung 24, im Ausführungsbeispiel ist diese Sensoreinrichtung 24 über eine Halterung 25 an dem Ackerschlepper 4 angeordnet. Es ist jedoch auch möglich, diese Sensoreinrichtung 24 im Bereich der Spritzeinrichtung 1 anzuordnen. Die Sensoreinrichtung 24 ist über Datenübertragungseinrichtungen 26 mit dem Bordcomputer 22 verbunden. Dieses Bordcomputersystem 22 erhält erfindungsgemäß von der Sensoreinrichtung 24 Datensignale über den Feuchtebedeckungsgrad der Pflanzen 23 und wahlweise über den Blattflächenindex der Pflanzen. Diese übermittelten Daten werden in den Bordcomputer 22 anhand eines in dessen Speicher hinterlegten Programms verarbeitet. Der Bordcomputer 22 ermittelt anhand der in seinem Speicher hinterlegten Daten aufgrund der von der Sensoreinrichtung 24 übermittelten Datensignale die auszubringende Trägerflüssigkeitsmenge. Des weiteren stellt der Bordcomputer 22 aufgrund der ermittelten Daten die Einstellvorrichtung zur Einstellung der einzubringenden Trägerflüssigkeitsmenge ein. Hierdurch ist die Trägerflüssigkeitsmenge an den Feuchtebedeckungsgrad und wahlweise den Blattflächenindex anzupassen.

Es ist auch möglich, dass weitere Sensoren zur Ermittlung der Luftfeuchtigkeit, der Anzahl der Pflanzen und der Pflanzentemperatur vorhanden sind. Auch diese Daten können entsprechend eines im Computer 22 hinterlegten Programms verarbeitet werden, so dass die ausgebrachte Trägerflüssigkeits- und/oder Wirkstoffmittelmenge entsprechend automatisch aufgrund der von dem Programm berechneten Daten eingestellt werden.

Die Funktionsweise der Spritzeinrichtung 1 ist folgende:

Anhand des Feuchtebedeckungsgrades der Pflanzen 23, der von den Sensor 24 in Verbindung mit dem Bordcomputer 22 ermittelt worden ist, wird über den Bordcomputer 22 die Einstelleinrichtung 16 für die Einstellung der Ausbringmenge der Trägerflüssigkeit eingestellt, so dass nur so viel Trägerflüssigkeit ausgebracht wird, wie der Feuchtebedeckungsgrad zulässt, damit die von den Düsen 11 erzeugten und den Wirkstoff enthaltenen Flüssigkeitströpfchen noch an den Pflanzen 23 und der Blättern der Pflanzen anhaften ohne von diesen herunter zu fallen bzw. zu fließen.

## Patentansprüche

1. Spritzeinrichtung (1) zum Ausbringen von Flüssigkeiten, insbesondere für landwirtschaftliche Zwecke, mit einer einem Fahrzeug zugeordneten Spritzbalkenanordnung (10) mit zumindest einer quer zur Fahrtrichtung verlaufenden Flüssigkeitsleitung, die in Abständen mit Spritzdüsen (11) versehen ist, wobei den Spritzdüsen über die zumindest eine Flüssigkeitsleitung zumindest eine die auszubringende Flüssigkeit jeweils von zumindest einer die Trägerflüssigkeit in einstellbarer Weise aus einem Flüssigkeitstank (7) fördernden und den Spritzdruck erzeugenden Flüssigkeitspumpe (12) und zumindest einer zumindest ein Wirkstoffmittel fördernden und in die Trägerflüssigkeit in dosierender Weise einspeisenden Dosierpumpe (19) in einstellbarer Menge zuführbar ist, wobei die den Spritzdüsen (11) zugeleitete Menge der Trägerflüssigkeit mittels einer vom einem Bordcomputer (22) ansteuerbaren Einstellvorrichtung (16) einstellbar und/oder veränderbar ist, **dadurch gekennzeichnet, dass** eine Sensoreinrichtung (24) vorhanden ist, dass die Sensoreinrichtung (24) Datensignale über den Feuchtebedeckungsgrad der Pflanzen (23) an den Bordcomputer (22) übermittelt, dass der Bordcomputer (22) aufgrund der über den Feuchtebedeckungsgrad der Pflanzen übermittelten Daten anhand eines in seinem Speicher hinterlegten Programms die auszubringende Trägerflüssigkeitsmenge ermittelt und entsprechend die Einstellvorrichtung (16) zur Einstellung der auszubringenden Trägerflüssigkeitsmenge einstellt.

2. Spritzeneinrichtung nach Anspruch 1, **dadurch gekennzeichnet, dass** die Einstellvorrichtung (16) die Mengen der Trägerflüssigkeit in Abhängigkeit klimatischer Einflüsse einstellt und/oder verändert.

3. Spritzeinrichtung nach Anspruch 1, **dadurch gekennzeichnet, dass** die Einstellvorrichtung (16) die Menge der Trägerflüssigkeit in Abhängigkeit des Blattflächenindex und des Feuchtebedeckungsgrades der mit dem Wirkstoffmittel zu behandelnden Pflanzen (23) einstellt und/oder verändert.

4. Spritzeinrichtung nach einem oder mehreren der vorstehenden Ansprüche, **dadurch gekennzeichnet, dass** der Spritzeinrichtung (1) zumindest eine Sensoreinrichtung (24) zur Ermittlung des Blattflächenindex und des Feuchtegrades der Pflanzen (23) zugeordnet ist.

5. Spritzeinrichtung nach einem oder mehreren der vorstehenden Ansprüche, **dadurch gekennzeichnet, dass** in Abhängigkeit der Luftfeuchtigkeit die Menge der Trägerflüssigkeit einstellbar ist.

6. Spritzeinrichtung nach einem oder mehreren der vorstehenden Ansprüche, **dadurch gekennzeichnet, dass** ein Sensor (24) zur Ermittlung der Anzahl der Pflanzen vorgesehen ist.

7. Spritzeinrichtung nach einem oder mehreren der vorstehenden Ansprüche, **dadurch gekennzeichnet, dass** mittels einer weiteren Einstellvorrichtung (20) die Menge des Wirkstoffmittels einstell- und/oder veränderbar ist.

8. Spritzeinrichtung nach einem oder mehreren der vorstehenden Ansprüche, **dadurch gekennzeichnet, dass** ein Sensor (24) zur Ermittlung der Pflanzentemperatur vorhanden ist.

## Claims

1. Spraying apparatus (1) for applying liquids, in particular for agricultural purposes, having a spraying boom assembly (10) that is assigned to a vehicle and that has at least one liquid line, which extends transversely in relation to the direction of travel and is provided with spraying nozzles (11) at intervals, at least one liquid to be applied being able to be supplied, in a settable manner, to the spraying nozzles via the at least one liquid line from, respectively, at least one liquid pump (12) that delivers the carrier liquid, in a settable manner, from a liquid tank (7) and generates the spraying pressure, and at least one dosing pump (19) that delivers an active substance and feeds it, in a dosing manner, into the carrier liquid, the quantity of carrier liquid supplied to the spraying nozzles (11) being settable and/or variable by means of a setting device (16) that is controllable by an on-board computer (22), **characterized in that** there is a sensor device (24), the sensor device (24) transmits to the on-board computer (22) data signals relating to the degree of moisture coverage of the plants (23), the on-board computer (22), on the basis of the transmitted data relating to the degree of moisture coverage of the plants and by means of a program stored in its memory, determines the quantity of carrier liquid to be applied and sets this quantity according to the setting device (16) for setting the quantity of carrier liquid to be applied.

2. Spraying apparatus according to Claim 1, **characterized in that** the setting device (16) sets and/or varies the quantities of carrier liquid dependent on climatic influences.

3. Spraying apparatus according to Claim 1, **characterized in that** the setting device (16) sets and/or varies the quantity of carrier liquid dependent on the leaf area index and on the degree of moisture coverage of the plants (23) to be treated with the active substance.

4. Spraying apparatus according to one or more of the preceding claims, **characterized in that** at least one sensor device (24), for determining the leaf area index and the degree of moisture of the plants (23), is assigned to the spraying apparatus (1).

5. Spraying apparatus according to one or more of the preceding claims, **characterized in that** the quantity of carrier liquid can be set dependent on the air humidity.

6. Spraying apparatus according to one or more of the preceding claims, **characterized in that** a sensor (24) is provided for determining the number of plants.

7. Spraying apparatus according to one or more of the preceding claims, **characterized in that** the quantity of active substance can be set and/or varied by means of a further setting device (20).

8. Spraying apparatus according to one or more of the preceding claims, **characterized in that** there is a sensor (24) for determining the plant temperature.

## Revendications

1. Installation de pulvérisation (1) pour distribuer des liquides, notamment à usage agricole, comprenant une flèche de pulvérisation (10), installée sur un véhicule, ayant au moins une conduite de liquide dirigée transversalement à la direction de déplacement, équipée de buses de pulvérisation (11), écartées les unes des autres,
- les buses de pulvérisation recevant par au moins cette conduite, ou du liquide vecteur par au moins une pompe de liquide (12) fournissant le liquide, de manière réglable à partir d'un réservoir à liquide (7) et générant la pression de pulvérisation, d'une pompe de dosage (19) réglable injectant au moins un agent actif dans le liquide vecteur, d'une manière dosée,
- la quantité de liquide vecteur fournie aux buses de pulvérisation (11) étant réglée et/ou modifiable par un dispositif de réglage (16) commandé à partir de l'ordinateur de bord (22),
installation **caractérisée en ce qu'**elle comporte une installation de capteur (24),
- l'installation de capteur (24) transmet des signaux de données concernant le degré de couverture d'humidité des plantes (23) à l'ordinateur de bord (22), et
- l'ordinateur de bord (22) déterminant la quantité de liquide vecteur à distribuer en fonction des données transmises concernant le degré de couverture humide des plantes, à l'aide d'un programme enregistré dans sa mémoire, et réglant de façon correspondante le dispositif de réglage (16) pour régler la quantité de liquide vecteur à distribuer.

2. Installation de pulvérisation selon la revendication 1,
**caractérisée en ce que**
le dispositif de réglage (16) règle et/ou modifie les quantités de liquide vecteur suivant les influences climatiques.

3. Installation de pulvérisation selon la revendication 1,
**caractérisée en ce que**
le dispositif de réglage (16) règle et/ou modifie la quantité de liquide vecteur en fonction de l'indice de surface de feuilles et du degré de couverture humide des plantes (23) à traiter avec l'agent actif.

4. Installation de pulvérisation selon l'une ou plusieurs des revendications précédentes,
**caractérisée en ce que**
l'installation de pulvérisation (1) comporte au moins une installation de capteur (24) pour déterminer l'indice de surface de feuilles et le degré d'humidité des plantes (23).

5. Installation de pulvérisation selon l'une ou plusieurs des revendications précédentes,
**caractérisée en ce qu'**
on règle la quantité de liquide vecteur en fonction de l'humidité de l'air.

6. Installation de pulvérisation selon l'une ou plusieurs des revendications précédentes,
**caractérisée par**
un capteur (24) pour déterminer le nombre de plantes.

7. Installation de pulvérisation selon l'une ou plusieurs des revendications précédentes,
**caractérisée en ce que**
l'on règle et/ou modifie la quantité d'agent actif à l'aide d'un autre dispositif de réglage (20).

8. Installation de pulvérisation selon l'une ou plusieurs des revendications précédentes,
**caractérisée par**
un capteur (24) pour déterminer la température des plantes.
